# EUROPÄISCHE PATENTSCHRIFT

(11) **EP 1 811 247 B1**
(45) Veröffentlichungstag und Bekanntmachung des Hinweises auf die Patenterteilung: **29.08.2012**
(21) Anmeldenummer: 07000642.4
(22) Anmeldetag: 13.01.2007
(51) Int. Cl.: F25B 17/08

(54) **Verfahren zur Montage eines Wärmepumpenmoduls**
Process for assembling of a heat pump
Procédé de montage d'une pompe à chaleur

(30) Priorität: 18.01.2006 AT 712006; 12.09.2006 DE 102006042717
(43) Veröffentlichungstag der Anmeldung: 25.07.2007
(73) Patentinhaber: Vaillant GmbH, 42859 Remscheid (DE)
(72) Erfinder: Burgdorf, Achim, 42929 Wemelskirchen (DE); Lang, Rainer, 51519 Odenthal (DE); Marth, Frank, 56851 Melsbach (DE); Marx, Uwe, 51375 Leverkusen (DE); Wienen, Johann, 46359 Heiden (DE)
(74) Vertreter: Hocker, Thomas

(56) Entgegenhaltungen:
- US-A- 4 169 362
- US-A1- 2003 015 093
- US-B1- 6 584 797
- US-B1- 6 843 071

## Beschreibung

Die Erfindung bezieht sich auf ein Verfahren zur Reinigung und Konditionierung der Komponenten eines Wärmepumpen-Moduls.

Bei Wärmepumpen wird Energie von einer Umweltwärmequelle in einem thermodynamischen Prozess zu Heizzwecken verwendet. Hierbei ist es möglich, Umweltwärmequellen zu nutzen, deren Temperaturniveau deutlich unterhalb der Solltemperatur des zu beheizenden Raumes oder des zu beheizenden Wassers liegt.

Bei Zeolith-Wärmepumpen wird in einem Behälter, in welchem ein starker Unterdruck herrscht, ein Kältemittel mittels Umweltwärme verdampft und von einem Zeolithen aufgenommen, der sich hierdurch erwärmt. Ist der Zeolith mit dem Kältemittel gesättigt, so muss durch Wärmezufuhr das Kältemittel wieder ausgetrieben werden. Das dampfförmige Kältemittel wird an einem Kondensator abgekühlt. Die jeweils gewonnene Wärme wird auf einen Heizkreislauf übertragen. Der Heizkreislauf kann sowohl zur Erzeugung von Raumwärme als auch von Brauchwasserbereitung verwendet werden.

Die Effizienz des Wärmepumpenprozesses ist stark davon abhängig, dass keine Fremdgase den Prozess negativ beeinflussen. So ist einerseits zu vermeiden, dass Umgebungsluft in das Wärmepumpen-Modul gelangt. Andererseits muss verhindert werden, dass bei der Einlagerung des Zeolithen in das Wärmepumpen-Modul der Zeolith mit Fremdgasen beladen ist. Derartige Fremdgase, die während des Wärmepumpenprozesses aus dem Zeolithen getrieben würden, beeinflussten den Prozess erheblich. Ferner sollten der Verdampfer/Kondensator, Sorberwärmetauscher und das Gehäuse keine Fremdstoffe enthalten. So könnte beispielsweise ein Öl, das von Tiefzieh-, Schneid- oder Biegeprozessen stammt oder Lösemittel dampfförmig in den Zeolithen gelangen, was dessen Prozessfähigkeit reduzierte. Als weitere zu vermeidende Fremdstoffe kommen Rückstände von Schweißprozessen oder Anlauffarben (dünne Oxydschichten) in Frage.

US 6 843 071 B1 offenbart ein Verfahren gemäß dem Oberbegriff des Anspruchs 1 und befasst sich mit einer Kühlvorrichtung für den einmaligen Gebrauch, die auf der Basis einer Absorption oder Adsorption dem Kühlgut Wärme entzieht und der Aufbereitung der dabei verwendeten Sorptionsmaterialien. Bei dem Ad- oder Absorptionsprozess nimmt das Sorptionsmaterial Kühldampf auf und entzieht dabei dem Kühlgut Wärme. Dieser Prozess endet, sobald das Sorptionsmaterial gesättigt ist. Für einen effizienten Prozess ist ein sehr trockenes Sorptionsmaterial notwendig. Daher ist vorgesehen, dass das Sorptionsmaterial auf Temperaturen von mindestens 300°C erhitzt wird und das so aus dem Sorptionsmaterial ausgetriebene Gas in einem Vakuumofen abgesaugt wird.

Aufgabe der vorliegenden Erfindung ist es, ein Verfahren zu Reinigung und Konditionierung der Komponenten eines Wärmepumpenmoduls zu schaffen, welches die Anwesenheit von Fremdstoffen im Wärmepumpenmodul verhindert.

Erfindungsgemäß wird dies zunächst gemäß den Merkmalen des Anspruchs 1 dadurch erreicht, dass Komponenten des Wärmepumpenmoduls in einem Vakuumofen bei hohen Temperaturen gereinigt und reduziert werden. Hierzu wird der Vakuumofen zunächst in kaltem Zustand evakuiert und erst nach Unterschreitung eines Schwellwertes, vorzugsweise eines vorgegebenen Drucks oder einer vorgegebenen Evakuierungszeit, erhitzt. Hierdurch wird ein Anlaufen oder eine Verzunderung der Komponenten vermieden.

Als besonders vorteilhaft hat sich erwiesen, dass der Druck im Vakuumofen auf einen Wert von kleiner 10⁻⁴ mbar reduziert wird und die Temperatur auf einen Bereich zwischen 1000°C und 1300°C erhitzt wird. Bei der Erhitzung des Vakuumofens auf die vorgegebene Maximaltemperatur sollte ein vorgegebener Temperaturverlauf eingehalten werden, um einerseits eine homogene Materialerwärmung zu erreichen und andererseits Materialbeschädigungen zu vermeiden. Wird die Ofentemperatur mit vorgegebenem Verlauf auf eine vorgegebene Temperatur erhitzt, so werden Anlauffarben durch die Reduzierung der Oxydschichten entfernt und Verunreinigungen wirkungsvoll beseitigt. Die Komponenten sollten verformungssicher, vorzugsweise in konturierten Formen gelagert werden. Hierdurch wird beispielsweise vermieden, dass Metalle sich auf Grund der Schwerkraft im weichen Zustand verformen. Auch die Abkühlung sollte mit vorgegebenem Temperaturverlauf erfolgen, um Chromkarbitbildung zu vermeiden. Hierdurch bleibt die Korrosionsbeständigkeit erhalten. Zur schnelleren Abkühlung können Edelgase oder Stickstoff eingesetzt werden. Die Belüftung des Vakuumofens darf erst unterhalb einer Temperatur von 100°C erfolgen, um ein erneutes Anlaufen der Metalloberflächen zu vermeiden. Nach dem Durchfahren zuvor beschriebener Schritte müssen die Komponenten derartig verpackt werden, dass eine erneute Verunreinigung ausgeschlossen ist.

Gemäß den Merkmalen des abhängigen Anspruchs 2 wird das Wärmepumpenmodul nach der Montage der Komponenten in einem evakuierten Vakuumofen erhitzt, wodurch Fremdgase aus dem Adsorbens entfernt werden können. Hierbei wird nach der Montage der Behälter bei vergleichsweise geringer Temperatur evakuiert, wobei der Druck kleiner 10⁻³ mbar sein sollte. Die Temperatur wird im Vakuumofen langsam auf eine vorgegebene Temperatur erhöht, wobei der Druck über einen vorgegebenen Wert nicht steigen darf, da es ansonsten zur Bildung von Anlauffarben kommen kann. Bei Erreichung der vorgegebenen Maximaltemperatur wird die Temperatur für eine bestimmte Zeit auf der vorgegebenen Solltemperatur gehalten und der Druck im Behälter weiter reduziert, bis ein zweiter vorgegebener Druck unterschritten ist.

Das Wärmepumpenmodul kann gemäß Anspruch 5 bereits im evakuierten Vakuumofen gasdicht verschlossen werden.

Gemäß den Merkmalen des abhängigen Anspruchs 6 wird der Vakuumofen anschließend abgekühlt, vorzugsweise unter Zugabe von Argon. Hierdurch wird der Abkühlprozess deutlich beschleunigt, da im evakuierten Ofen die Abkühlung ansonsten äußerst langsam abliefe. Alternativ wäre eine Kühlung mittels Helium ebenfalls möglich.

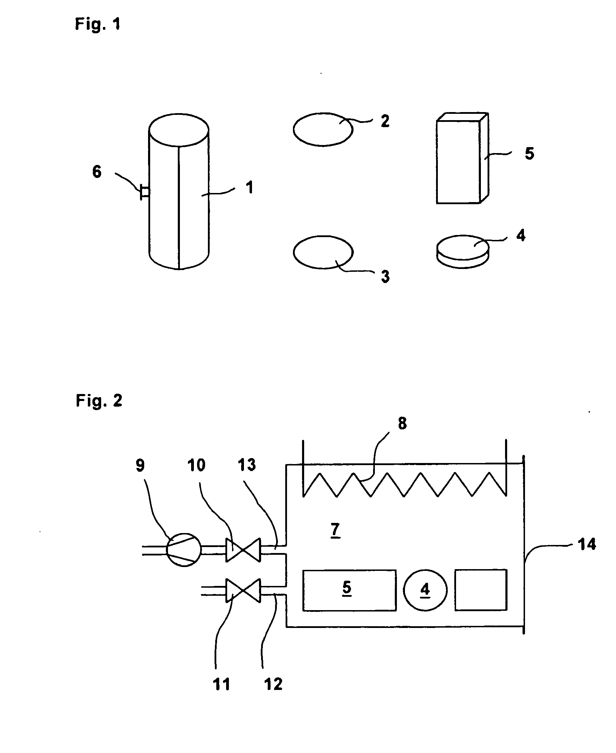

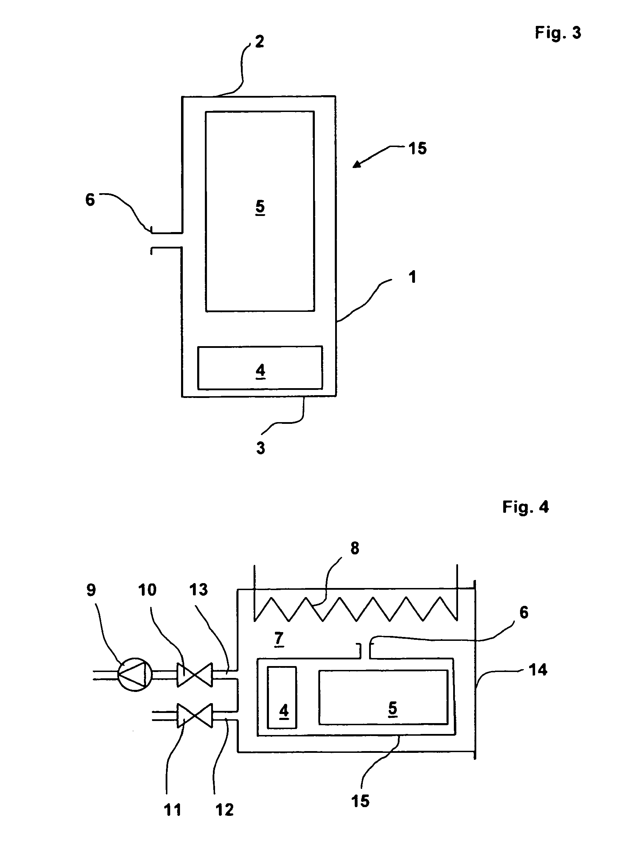

Der gereinigte Wärmetauscher des Sorbers 5 wird mit Adorbens befüllt und derartig gasdurchlässig verschlossen, dass zwar das Adsorbens nicht mehr entweichen kann, Gase jedoch an das Absorbens gelangen und abgeleitet werden kann. Der Sorber 5, der Verdampfer/Kondensator 4, der Mantel 1, der Deckel 2 und der Boden 3 werden zu einem Wärmepumpenmodul 15 gemäß Figur 3 verbaut. Hierbei ist darauf zu achten, dass die Verbindungen, zum Beispiel Schweißnähte eine hinreichend gute Vakuumdichtheit aufweisen. An einem entsprechenden Prüfstand wird das komplette Wärmepumpenmodul 15 auf Dichtheit überprüft.

Im Konditionierungs-Verfahrensschritt wird das Wärmepumpenmodul 15 in dem Vakuumofen 7 gemäß Figur 4 positioniert. Hierbei muss der Anschlussflansch 6 sich an der obersten Stelle im Modul befinden und nach oben weisen. Der Vakuumofen 7 wird nun evakuiert. Bei Unterschreiten eines vorgegebenen Druckes wird die Temperatur im Vakuumofen kontinuierlich nach einem vorgegebenen Temperaturverlauf erhöht. Bei einer Temperatur zwischen 320°C und 600°C (je nach eingesetztem Zeolith) wird die Temperatur über einen gewissen Zeitraum beibehalten bis der Druck wieder auf 10⁻⁴ mbar gesunken ist. Bei diesem Prozess können die Fremdgase aus dem Adsorbens entweichen. Die Fremdgase gelangen zunächst aus dem Adsorbens in den Innenraum des Wärmepumpenmoduls 15 und von dort über den Anschlussflansch 6 in den Innenraum des Vakuumofens 7, von wo aus die Gase über die Abführleitung 13 und die Vakuumpumpe 9 abgeführt werden. Ist der Adsorbens und das Wärmepumpenmodul 15 ausreichend evakuiert, so kann der Vakuumofen 7 wieder abgekühlt werden. Hierzu wird der Vakuumofen 7 mit einem Edelgas, welches schwerer als Luft ist, z.B. Argon gekühlt. Das Argon wird in den Vakuumofen 7 geleitet, kühlt dort die Komponenten und wird anschließend wieder aus dem Vakuumofen 7 zur Kühlung geleitet. Ist das Innere des Vakuumofens 7 ausreichend abgekühlt, so wird ein Druckausgleich mit dem gleichen Edelgas vorgenommen. Wird die Tür 14 des Vakuumofens 7 geöffnet, so kann keine Luft in das Wärmepumpenmodul 15 eindringen, da die Luft das schwerere Argon nicht nach unten verdrängen kann. Das Wärmepumpenmodul 15 wird nun mittels eines Ventils verschlossen, so dass keine Luft eindringen und das Edelgas nicht entweichen kann.

Wird als Edelgas ein Gas verwendet, welches leichter ist als Luft, z. B. Helium, so muss sich der Verbindungsflansch 6 an der tiefsten Stelle an der Unterseite des Wärmepumpenmoduls 15 beim Konditionierungsprozess befinden. Die Luft kann dann beim Entnehmen des Wärmepumpenmoduls 15 aus dem Vakuumofen 7 nicht nach oben das leichtere Helium verdrängen.

In einem weiteren Verfahrensschritt wird das Wärmepumpenmodul 15 evakuiert. Hierzu wird an das Ventil des Wärmepumpenmoduls 15 eine Vakuumpumpe 9 angeschlossen, das Ventil geöffnet und das Edelgas abgesaugt.

In einem letzten Verfahrenschritt wird das Wärmepumpenmodul 15 mit entgastem Wasser befüllt. Beim Befüllen muss darauf geachtet werden, dass über die Füllleitung nicht wieder Fremdstoffe in das Wärmpumpenmodul 15 gelangen können.

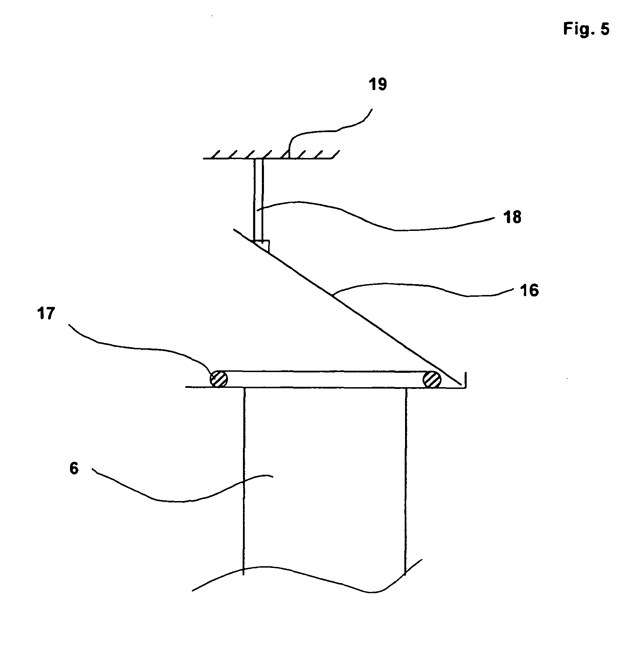

In einer vorteilhaften Ausgestaltung der Erfindung wird das Wärmepumpenmodul 15 bereits im Vakuumofen 7 gasdicht verschlossen. Hierzu befindet sich gemäß Figur 5 auf dem Anschlussflansch 6 eine Lotdichtung 17, deren Schmelztemperatur oberhalb der Verfahrenstemperatur, bei welcher der Behälter konditioniert wird, schmilzt. Ferner ist ein Deckel 16 angebracht, welcher über ein Lot 18 an einer Haltevorrichtung 19 gehalten wird. Ist das Modul ausreichend konditioniert, so wird kurzzeitig die Temperatur im Vakuumofen 7 erhöht. Die Lotdichtung 17 schmilzt und der Lotfaden 18, der ebenfalls schmilzt, kann den Deckel 16 nicht mehr halten, wodurch der Deckel 16 die Öffnung des Anschlussflansches 6 abdeckt. Sobald die Temperatur im Vakuumofen 7 reduziert wird, erstarrt die Lotdichtung 17, wodurch das Wärmepumpenmodul 15 gasdicht von seiner Umgebung abgeschlossen ist. Wird nun das Wärmepumpenmodul 15 im Vakuumofen 7 gekühlt, so dringt das kühlende Edelgas nicht in das Wärmepumpenmodul 15 ein. Nach der Entnahme des Wärmepumpenmoduls 15 aus dem Vakuumofen 7 wird es mit entgastem Wasser befüllt. Dazu muss eine gasdicht verschlossene Füllkapillare, die mit dem Deckel 16 des Wärmepumpenmoduls verbunden ist, mittels einer evakuierten Füllleitung mit dem Wasservorratsbehälter verbunden wird. Die Füllkapillare wird mit einem Dorn so aufgestochen, dass das entgaste Wasser durch die Füllleitung und die Füllkapillare ins innere des Wärmepumpenmoduls gelangt. Mit Hilfe einer Quetschvorrichtung wird die Füllkapillare nach der Befüllung wieder gasdicht verschlossen. Abschließend kann optional das obere Ende der Füllkapillare mit einem Schweißpunkt zusätzlich verschlossen werden.

Alternativ zur Darstellung in Figur 5 kann der Flansch in Form eines Trichters und der Deckel in Form eines Kegels ausgebildet sein. Die Dichtung ist derart geformt, dass der Kegel im starren Zustand der Dichtung nur punktweise aufliegt, weiterhin den Flansch zum Ofenraum eine Öffnung freigibt und erst beim Schmelzen der Dichtung der Kegel in den Trichter fällt und durch das Lot abgedichtet wird. Befindet sich der Flansch unten am Behälter, so kann ein Federmechanismus zum Verschließen thermisch ausgelöst werden.

Ferner besteht die Möglichkeit, mittels Vakuumschweißen, Vakuumschrauben oder Verpressen im evakuierten Vakuumofen den Flansch zu verschließen.

## Patentansprüche

1. Verfahren zur Reinigung und Konditionierung der Komponenten eines Wärmepumpenmoduls (15) mit zumindest einem Gehäuse (1, 2, 3), einem Verdampfer/Kondensator (4), und einem Sorber (5), bei dem zumindest eine der Komponenten (4, 5) in einem Vakuumofen (7) bei hoher Temperatur gereinigt und / oder konditioniert beziehungsweise evakuiert werden, **dadurch gekennzeichnet, dass** zur Reinigung der Komponenten (4, 5) in dem Vakuumofen (7) bei hoher Temperatur der Vakuumofen (7) im kalten Zustand evakuiert und erst nach Unterschreitung eines Schwellwerts, vorzugsweise eines vorgegebenen Drucks oder einer vorgegebenen Evakuierungszeit, erhitzt wird, wobei die Erhitzung vorzugsweise mit vorgegebenem Temperaturverlauf erfolgt, optional die Temperatur eine vorbestimmte Verweilzeit konstant gehalten wird, anschließend in einem weiteren Abschnitt die Temperatur vorzugsweise mit vorgegebenem Temperaturverlauf reduziert wird und zumindest bis zur zum Erreichen der maximalen Temperatur der Vakuumofen (7) evakuiert wird.

2. Verfahren zur Reinigung und Konditionierung der Komponenten eines Wärmepumpenmoduls (15) nach Anspruch 1, **dadurch gekennzeichnet, dass** der Sorber (5) mit Adsorbens, vorzugsweise Zeolithen, befüllt wird, zumindest die Gehäuseteile (1, 2, 3), der Verdampfer/Kondensator (4) sowie der Sorber (5) zu einem Wärmepumpenmodul (15), das über mindestens eine Öffnung (6) verfügt, montiert werden, und anschließend das Wärmepumpenmodul (15) in einem Vakuumofen (7) evakuiert und erhitzt wird.

3. Verfahren zur Reinigung und Konditionierung der Komponenten eines Wärmepumpenmoduls (15) nach Anspruch 2, **dadurch gekennzeichnet, dass** nach Unterschreitung eines Schwellwerts, vorzugsweise eines vorgegebenen Drucks oder einer vorgegebenen Evakuierungszeit, die Temperatur im Vakuumofen erhöht wird, vorzugsweise mit einem vorgegebenen Temperaturverlauf auf eine Temperatur größer 320°C, wobei der Vakuumofen (7) evakuiert wird.

4. Verfahren zur Reinigung und Konditionierung der Komponenten eines Wärmepumpenmoduls (15) nach Anspruch 3, **dadurch gekennzeichnet, dass** nach Erreichen der vorgegebenen Maximaltemperatur der Vakuumofen (7) für eine vorgegebene Verweilzeit weiterhin evakuiert wird bis der Druck einen vorgegebenen Druck, vorzugsweise 10⁻⁴ mbar unterschreitet.

5. Verfahren zur Reinigung und Konditionierung der Komponenten eines Wärmepumpenmoduls (15) nach einem der Ansprüche 1 bis 4, **dadurch gekennzeichnet, dass** das Wärmepumpenmodul (15) im Vakuumofen (7) verschlossen wird, vorzugsweise durch Vakuumschweißen, Vakuumverschrauben, Verpressen oder Schmelzen der Halterung eines Deckels (16), der durch Schwerkraft auf die Öffnung (6) des Wärmepumpenmoduls (15) fällt und Schmelzen einer Dichtung (17), welche den Deckel (16) mit der Öffnung (6) gasdicht verbindet.

6. Verfahren zur Reinigung und Konditionierung der Komponenten eines Wärmepumpenmoduls (15) nach einem der Ansprüche 1 bis 5, **dadurch gekennzeichnet, dass** das Wärmepumpenmodul (15) im Vakuumofen (7) unter Zugabe eines Edelgases, vorzugsweise Argon oder Helium, abgekühlt wird.

7. Verfahren zur Reinigung und Konditionierung der Komponenten eines Wärmepumpenmoduls (15) nach einem der Ansprüche 1 bis 6, **dadurch gekennzeichnet, dass** das Wärmepumpenmodul (15) im Vakuumofen (7) bis auf weniger 100°C gekühlt wird.

8. Verfahren zur Reinigung und Konditionierung der Komponenten eines Wärmepumpenmoduls (15) nach einem der Ansprüche 1 bis 7, **dadurch gekennzeichnet, dass** das evakuierte Wärmepumpenmodul (15) mit Kältemittel, vorzugsweise entgastem Wasser, befüllt und anschließend verschlossen wird.

9. Verfahren zur Reinigung und Konditionierung der Komponenten eines Wärmepumpenmoduls (15) nach Anspruch 8, **dadurch gekennzeichnet, dass** eine mit dem Deckel (16) verbundene gasdicht verschlossene Füllkapillare mittels einer evakuierten Füllleitung mit einem Wasservorratsbehälter verbunden wird, die Füllkapillare mit einem Dorn aufgestochen wird, entgastes Wasser durch die Füllleitung und die Füllkapillare ins Innere des Wärmepumpenmoduls (15) geleitet wird und die Füllkapillare mit Hilfe einer Quetschvorrichtung nach der Befüllung wieder gasdicht verschlossen und optional das Ende der Füllkapillare mit einem Schweißpunkt zusätzlich verschlossen wird.

## Claims

1. Method for cleaning and conditioning the components of a heat pump module (15) comprising at least one housing (1, 2, 3), an evaporator/condenser (4), and a sorber (5), in which at least one of the components (4, 5) is cleaned and/or conditioned and/or evacuated in a vacuum oven (7) at high temperature, **characterised in that**, to clean the components (4, 5) in the vacuum oven (7) at high temperature, the vacuum oven (7) is evacuated in the cold state and is only heated once a threshold value, preferably a predefined pressure or a predefined evacuation time, has been undershot, the heating process preferably being carried out with a predefined temperature profile, the temperature optionally being kept constant for a predetermined residence time, the temperature then preferably being reduced in a further portion with a predefined temperature profile, and the vacuum oven (7) being evacuated at least until the maximum temperature is reached.

2. Method for cleaning and conditioning the components of a heat pump module (15) according to claim 1, **characterised in that** the sorber (5) is filled with adsorbent, preferably zeolites, at least the housing parts (1, 2, 3), the evaporator/condenser (4) and the sorber (5) are assembled to form a heat pump module (15), which has at least one opening (6), and the heat pump module (15) is then evacuated and heated in a vacuum oven (7).

3. Method for cleaning and conditioning the components of a heat pump module (15) according to claim 2, **characterised in that**, once a threshold value, preferably a predefined pressure or a predefined evacuation time, has been undershot, the temperature in the vacuum oven is increased, preferably with a predefined temperature profile, to a temperature greater than 320 °C, the vacuum oven (7) being evacuated.

4. Method for cleaning and conditioning the components of a heat pump module (15) according to claim 3, **characterised in that**, once the predefined maximum temperature has been reached, the vacuum oven (7) is furthermore evacuated for a predefined residence time until the pressure falls below a predefined pressure, preferably 10⁻⁴ mbar.

5. Method for cleaning and conditioning the components of a heat pump module (15) according to one of claims 1 to 4, **characterised in that** the heat pump module (15) is sealed in the vacuum oven (7), preferably by vacuum welding, vacuum screwing, compression or melting of the support of a cover (16), which falls over the opening (6) in the heat pump module (15) as a result of gravity, and by melting of a seal (17), which connects the cover (16) to the opening (6) in a gastight manner.

6. Method for cleaning and conditioning the components of a heat pump module (15) according to one of claims 1 to 5, **characterised in that** the heat pump module (15) is cooled in the vacuum oven (7) with the addition of a noble gas, preferably argon or helium.

7. Method for cleaning and conditioning the components of a heat pump module (15) according to one of claims 1 to 6, **characterised in that** the heat pump module (15) is cooled in the vacuum oven (7) to less than 100 °C.

8. Method for cleaning and conditioning the components of a heat pump module (15) according to one of claims 1 to 7, **characterised in that** the evacuated heat pump module (15) is filled with coolant, preferably degassed water, and is then sealed.

9. Method for cleaning and conditioning the components of a heat pump module (15) according to claim 8, **characterised in that** a gastight, sealed filling capillary connected to the cover (16) is connected to a water storage container by means of an evacuated filling line, the filling capillary is pierced by a spike, degassed water is conveyed through the filling line and the filling capillary into the heat pump module (15), and the filling capillary is again sealed in a gastight manner, after the filling process, with the aid of a pinching device, and the end of the filling capillary is optionally additionally sealed by a weld point.

## Revendications

1. Méthode de nettoyage et de conditionnement des composants d'un module de pompe à chaleur (15) comprenant au moins un logement (1, 2, 3), un évaporateur/condenseur (4), et un sorbeur (5), dans lequel au moins un des composants (4, 5) est nettoyé et/ou conditionné et/ou mis sous vide dans une étuve à vide (7) à haute température, **caractérisée en ce que**, pour nettoyer les composants (4, 5) dans l'étuve à vide (7) à haute température, l'étuve à vide (7) est mise sous vide dans l'état froid et est seulement chauffée une fois qu'elle passe en-dessous d'une valeur seuil, de préférence une pression prédéfinie ou un temps de mise sous vide prédéfini, le processus de chauffage étant effectué de préférence avec un profil de température prédéfini, la température étant facultativement gardée constante pour un temps de résidence prédéterminé, la température étant ensuite réduite de préférence dans une autre portion avec un profil de température prédéfini, et l'étuve à vide (7) étant mise sous vide au moins jusqu'à ce que la température maximale soit atteinte.

2. Méthode de nettoyage et de conditionnement des composants d'un module de pompe à chaleur (15) selon la revendication 1, **caractérisée en ce que** le sorbeur (5) est rempli d'adsorbant, de préférence des zéolites, au moins les parties du logement (1, 2, 3), l'évaporateur/condenseur (4) et le sorbeur (5) sont assemblés pour former un module de pompe à chaleur (15), qui possède au moins une ouverture (6), et le module de pompe à chaleur (15) est ensuite mis sous vide et chauffé dans une étuve à vide (7).

3. Méthode de nettoyage et de conditionnement des composants d'un module de pompe à chaleur (15) selon la revendication 2, **caractérisée en ce que**, une fois que l'on passe en-dessous d'une valeur seuil, de préférence une pression prédéfinie ou un temps d'évacuation prédéfini, la température dans l'étuve à vide est augmentée, de préférence avec un profil de température prédéfini, à une température supérieure à 320 °C, l'étuve à vide (7) étant mise sous vide.

4. Méthode de nettoyage et de conditionnement des composants d'un module de pompe à chaleur (15) selon la revendication 3, **caractérisée en ce que**, une fois que la température maximale prédéfinie est atteinte, l'étuve à vide (7) est en outre mise sous vide pour un temps de résidence prédéfini jusqu'à ce que la pression tombe en dessous d'une pression prédéfinie, de préférence 10⁻⁴ mbar.

5. Méthode de nettoyage et de conditionnement des composants d'un module de pompe à chaleur (15) selon l'une des revendications 1 à 4, **caractérisée en ce que** le module de pompe à chaleur (15) est scellé dans l'étuve à vide (7), de préférence par soudure à vide, vissage à vide, compression ou fonte du support d'un couvercle (16) qui tombe sur l'ouverture (6) dans le module de pompe à chaleur (15) en conséquence de la gravité, et par fonte d'un sceau (17), qui connecte le couvercle (16) à l'ouverture (6) de façon étanche aux gaz.

6. Méthode de nettoyage et de conditionnement des composants d'un module de pompe à chaleur (15) selon l'une des revendications 1 à 5, **caractérisée en ce que** le module de pompe à chaleur (15) est refroidi dans l'étuve à vide (7) avec l'addition d'un gaz noble, de préférence de l'argon ou de l'hélium.

7. Méthode de nettoyage et de conditionnement des composants d'un module de pompe à chaleur (15) selon l'une des revendications 1 à 6, **caractérisée en ce que** le module de pompe à chaleur (15) est refroidi dans l'étuve à vide (7) à moins de 100 °C.

8. Méthode de nettoyage et de conditionnement des composants d'un module de pompe à chaleur (15) selon l'une des revendications 1 à 7, **caractérisée en ce que** le module de pompe à chaleur (15) est rempli de liquide de refroidissement, de préférence de l'eau dégazée, et est ensuite scellé.

9. Méthode de nettoyage et de conditionnement des composants d'un module de pompe à chaleur (15) selon la revendication 8, **caractérisée en ce que**, un capillaire de remplissage étanche aux gaz scellé connecté à la couverture (16) est connecté à un conteneur de stockage de l'eau au moyen d'une canalisation de remplissage à vide, le capillaire de remplissage est percé par une pointe, de l'eau dégazée est transportée à travers la canalisation de remplissage et le capillaire de remplissage dans le module de . pompe à chaleur (15), et le capillaire de remplissage est à nouveau scellé de façon étanche aux gaz, après le processus de remplissage, à l'aide d'un appareil de pincement, et l'extrémité du capillaire de remplissage est en outre facultativement scellée par un point de soudure.
